# EUROPÄISCHE PATENTSCHRIFT

(11) **EP 2 157 525 B1**
(45) Veröffentlichungstag und Bekanntmachung des Hinweises auf die Patenterteilung: **10.01.2018**
(21) Anmeldenummer: 08014865.3
(22) Anmeldetag: 21.08.2008
(51) Int. Cl.: G06F 21/56, H04L 29/06

(54) **Verfahren zur Erkennung von Schadsoftware**
Method for recognising malware
Procédé de reconnaissance de logiciels nuisibles

(43) Veröffentlichungstag der Anmeldung: 24.02.2010
(73) Patentinhaber: Unify GmbH & Co. KG, 80807 München (DE)
(72) Erfinder: Fischer, Kai, 85598 Baldham (DE); Prange, Holger, 81373 München (DE)
(74) Vertreter: Fritzsche, Thomas

(56) Entgegenhaltungen:
- WO-A-02/06928
- WO-A-95/33237
- WO-A-2005/114414
- WO-A-2005/114539
- WO-A-2007/095726
- GB-A- 2 400 197
- US-A- 5 319 776
- US-A- 5 414 833
- US-A- 5 960 170
- US-A- 6 085 224
- US-A- 6 092 194
- US-A1- 2003 097 378
- US-A1- 2003 208 687
- US-A1- 2003 212 902
- US-A1- 2005 283 827
- US-B1- 6 192 512
- US-B1- 6 697 950
- US-B1- 7 089 591

## Beschreibung

Die Erfindung betrifft ein Verfahren zur Erkennung von Schadsoftware.

Unter dem Begriff Schadsoftware (»Malware«) werden ausführbare Anweisungen bezeichnet, welche unerwünschte Funktionen auf einem Rechnersystem oder rechnergestützten System ausführen. Die Schadsoftware ist gewöhnlich getarnt oder läuft unbemerkt im Hintergrund.

Unter Schadsoftware werden insbesondere Computerviren oder Computerwürmer verstanden, ferner auch Trojanische Pferde, Spionagesoftware (»Spyware«) wie z.B. »Key Logger«.

Zur Behandlung von Schadsoftware sind im Stand der Technik sogenannte Virenscanner bekannt, welche eine Erkennung und üblicherweise auch eine Unschädlichmachung der Schadsoftware ermöglichen. Unter Unschädlichmachung wird insbesondere ein Löschen, eine Quarantänisierung der Schadsoftware und/oder eine Hinderung an deren Ausführung verstanden.

Die identifizierte Schadsoftware nutzt dabei Möglichkeiten der Ausführungsumgebung, auf dem auch der Virenscanner abläuft. Ein Beispiel für eine Ausführungsumgebung ist insbesondere ein Betriebssystem eines Rechners. Derzeitige Virenscanner sind jedoch auch mit dem Nachteil behaftet, dass sie lediglich Schadsoftware innerhalb der Ausführungsumgebung identifizieren können, in der sie selbst zum Ablauf gebracht wird.

In GB 2 400 197 A ist ein Anti-Schadsoftware-Scanner beschrieben, der Mittel zum Verarbeiten von Script- und Makrodateien und zum Kennzeichnen dieser Dateien als vermutlich defekt oder nicht aufweist basierend auf einer automatisierten Analyse des Quellcodes in der Datei. Diese Analyse bezieht eine Trennung der Programmquelle in Teilgruppen wie Anmerkung, variable Namen und Routine-Namen mit ein, wobei Duplikate entfernt werden und eine Buchstabenhäufigkeitsverteilungsanalyse der resultierenden Zeichenketten ausgeführt wird.

In US 6,085,224 sind ein System und ein Verfahren für das Ermitteln von Auslöser-Ereignissen in Datenströmen beschrieben, die über ein Computerkommunikationsnetzwerk empfangen werden. Das System umfasst ein Abfangmittel zum Abfangen von Datenströmen eines Computernetzwerk, die ein Anwendungsprogramm bedienen sollen, einen Scanner für das Abtasten des abgefangenen Datenstroms nach Auslöserereignissen, wie Cookiedaten, Skriptbefehlen und Appletprogrammen, und ein Ereignisantwortgenerator zur Verarbeitung ermittelter Auslöserereignisse. Die Ereignisindikatoren und ein Aktionsmenü werden durch den Ereignisantwortgenerator erzeugt und mit dem verarbeiteten Datenstrom an das Anwendungsprogramm geliefert. Das Anwendungsprogramm zeigt die Ereignisindikatoren an, so dass der Benutzer auf die Auslöserereignisse aufmerksam gemacht wird, wobei das Aktionsmenü dem Benutzer erlaubt auf die ermittelten Auslöserereignisse zu reagieren.

In US 2003/0208687 A1 ist eine Internet-Vorrichtung beschrieben, die eine Schnittstelle zur Verbindung mit einem Endgerät, einen Speicher und eine Netzwerkverbindung umfasst. Protokollebene-Programme sind in dem Speicher abgespeichert für den Empfang von Daten, die von einem Netzwerk an das Endgerät durch die Internet-Vorrichtung übertragen werden. Anwendungsebene-Antivirusprogramme in dem Speicher zum Erkennen von Computerviren in den empfangenen Daten dienen als Firewall gegen die erkannten Computerviren für das Endgerät.

Es ist eine Aufgabe der Erfindung, ein universelleres Verfahren zur Erkennung von Schadsoftware bereitzustellen, welche die aus dem Stand der Technik bekannten Nachteile zugunsten einer universelleren Erkennung von Schadsoftware verbessert.

Eine Lösung der Aufgabe erfolgt hinsichtlich ihres Verfahrensaspekts durch ein Verfahren mit den Merkmalen des Patentanspruchs 1.

Erfindungsgemäß wird ein Verfahren zur Erkennung von Schadsoftware vorgeschlagen, bei dem paketorientierte und in einem Netzwerkprotokoll, das protokollhierarchisch oberhalb eines Übertragungsprotokolls und unterhalb eines Applikationsprotokolls eingeordnet ist, formatierte Daten (D) empfangen werden, bei dem die Daten (D) einer Analyse bezüglich einer Wirkung der Daten (D) bei einer Behandlung der Daten (D) in verschiedenen Applikationsprotokollen, die sich von dem Netzwerkprotokoll unterscheiden, unterzogen werden, in der die Daten (D) auf Anweisungen (INS), insbesondere Befehle, untersucht werden, welche in mindestens einem Applikationsprotokoll der verschiedenen Applikationsprotokolle zumindest teilweise als Schadsoftware wirken, wobei die Daten (D) bezüglich einer Wirkung der Daten (D) bei einer Behandlung der Daten (D) in verschiedenen Ausführungsumgebungen, insbesondere Betriebssystemen, auf Anweisungen (INS) untersucht werden, welche auf mindestens einer der verschiedenen Ausführungsumgebungen zumindest teilweise als Schadsoftware wirken, wobei die Analyse applikations- und ausführungsumgebungs-übergreifend derart durchgeführt wird, dass bestimmt werden kann, ob potentiell schädigende Anweisungen (INS) in den Daten (D) enthalten sind. Dabei wird die paketorientierte Übertragungsweise durch eine Vielzahl von Datenpaketen mit einem Kopfdateneintrag bzw. »Header« sowie einem oder mehreren Dateneinträgen bzw. »Body« gebildet. Die empfangenen Daten sind dabei als Teil des Bodys, als Teil des Headers oder auch einer Kombination aus beiden zu verstehen. Die Daten werden auf Anweisungen untersucht, welche in mindestens einem Applikationsprotokoll zumindest teilweise als Schadsoftware wirken. Die erfindungsgemäße Analyse umfasst also eine Analyse der Daten bezüglich ihres Verhaltens in verschiedenen Applikationsprotokollen, welche dem Netzwerkprotokoll nicht bekannt sind. Mit anderen Worten wird durch das erfindungsgemäße Verfahren eine Behandlung der Daten in verschiedenen Applikationsprotokollen oder auch Ausführungsumgebungen simuliert, um im Rahmen der Analyse zu einem Urteil zu kommen, ob einzelne Daten oder die gesamten Daten in einer Umgebung außerhalb des Netzwerkprotokolls zumindest teilweise als Schadsoftware wirken.

Ein Netzwerkprotokoll ist eine exakte Vereinbarung, gemäß der Daten zwischen Rechnersystemen oder Prozessen ausgetauscht werden, die durch ein Netzwerk miteinander verbunden sind. Die Vereinbarung besteht aus einem Satz von Regeln und Formaten, auch Syntax genannt, die das Kommunikationsverhalten der kommunizierenden Instanzen bestimmen. Gemäß der hier gewählten Terminologie ist unter einem Netzwerkprotokoll ein Protokoll zu verstehen, dass protokollhierarchisch oberhalb eines Übertragungsprotokolls - insbesondere TCP/IP oder UDP - liegt und andererseits unterhalb eines Applikationsprotokolls eingeordnet ist. Eine Bestimmung des Kommunikationsverhaltens wird auch als Semantik bezeichnet. Ein bekanntes Beispiel für ein Netzwerkprotokoll ist das »Session-Initiation-Protocol«, abgekürzt SIP.

Untersucht werden dabei beispielsweise die Nutzdaten, welche im Rahmen des Netzwerkprotokolls transportiert werden. Im Beispiel von SIP können die Nutzdaten beispielsweise Skriptanweisungen enthalten, welche selbst nicht Teil des SIP-Protokolls sind.

Ein weiterer Gegenstand der Untersuchungen sind Nachrichtenkopfeinträge, welche ebenfalls schädigende Anweisungen enthalten können.

Ein wesentlicher Vorteil des erfindungsgemäßen Verfahrens ist in der Analyse der im Netzwerkprotokoll transportierten Daten zu sehen, welche anhand verschiedener Applikationsprotokolle (bzw. anhand zumindest eines Applikationsprotokolls) überprüft wird. Eine solche Maßnahme gewährleistet, dass eine Analyse nicht auf eine Identifizierung von Schadsoftware im Netzwerkprotokoll beschränkt bleibt, sondern dass eine Auswirkung der transportierten Daten in der Bearbeitung durch weitere Applikationen berücksichtigt werden kann.

Weitere vorteilhafte Weiterbildungen der Erfindung sind Gegenstand der Unteransprüche.

In vorteilhafter Weise wird bei Vorliegen von Anweisungen, welche in mindestens einem Applikationsprotokoll zumindest teilweise als Schadsoftware wirken, eine Meldung an die das Applikationsprotokoll bearbeitende Applikation gesendet. Eine solche Meldung würde beispielsweise eine Nichtausführung der Anweisungen und/oder eine Löschung der Anweisungen innerhalb der nachgelagerten Applikation zur Folge haben. Eine Löschung oder eine Quarantänisierung kann im Übrigen auch direkt durch die die Daten analysierenden Mittel vorgenommen werden.

Die Anweisungen können verschiedener Natur sein, da die meisten Netzwerkprotokolle für die transportierten Nutzdaten keinerlei Vorgaben vorsehen. Dies gilt in eingeschränkter Weise auch für die Nachrichtenkopfeinträge, welche neben einer protokollgemäßen Syntaxdefinition gewisse Freiheiten für Einträge bieten. Beispielsweise können die Anweisungen in Form von kompiliertem Code, in Form von Skriptanweisungen wie z.B. Java-Skript, in Form von Makroanweisungen oder auch in Form einer Verknüpfung auf einen entfernten (»remote«) Speicherort vorliegen.

Neben einer Analyse hinsichtlich verschiedener Applikationsprotokolle ist in einer vorteilhaften Ausführung der Erfindung vorgesehen, dass die Daten auf Anweisungen untersucht werden, welche in einer Ausführungsumgebung als Schadsoftware wirken könnten, die nicht mit einer ersten Ausführungsumgebung identisch ist, auf welcher das erfindungsgemäße Verfahren zum Einsatz kommt. Mit einer solchen vorteilhaften Maßnahme wird dem Umstand Rechnung getragen, dass die Daten, insbesondere die Nutzdaten in einer Applikation verarbeitet werden können, welche nicht in der aktuellen Ausführungsumgebung betrieben wird. Die genannte Maßnahme trägt somit weiterhin zu einer Generalisierung einer Erkennung von Schadsoftware bei.

Vorteilhaft ist weiterhin der Einsatz einer sog. White-List, d.h. einer Liste, welche eine Reihe von Anweisungen klassifiziert, wobei die zu untersuchenden Daten auf die in der White-List spezifizierten Anweisungen beschränkt werden können. Alternativ werden die Anweisungen nicht unweigerlich auf die vorgesehenen Anweisungen beschränkt. In einem solchen Fall kann vorgesehen sein, nicht in der White-List verzeichnete Anweisungen einer detaillierten Überprüfung zuzuführen.

In einer weiteren Ausführungsform der Erfindung wird alternativ oder zusätzlich zur White-List eine Black-List zum Einsatz gebracht, wobei letztere eine Definition von Anweisungen enthält, welche in einem jeweiligen Applikationsprotokoll zumindest teilweise als Schadsoftware klassifiziert sind. Mit anderen Worten enthält diese Liste eine Spezifikation von syntaktischen Elementen, welche für eine jeweilige Anwendung einen potentiellen Schaden verursachen könnte.

Als vorteilhaft erweist sich ein Vorhalten mehrerer Black-Lists und mehrerer White-List. Jede einzelne Black-List als auch jede einzelne White-List sind in vorteilhafter Weise für ein jeweiliges, bestimmtes Applikationsprotokoll spezifiziert, da in einem ersten Applikationsprotokoll unschädliche Anweisungen sich in einem zweiten Applikationsprotokoll durchaus als schädlich erweisen können. Wird eine Anweisung mit einer auf der Black-List stehenden Anweisung identifiziert, kann in vorteilhafter Weise eine definierte Reaktion ausgelöst werden, also z.B. eine Blockierung der Anweisung, eine Zurückweisung der Anweisung oder sogar eine Auslöschung schädlicher Anweisungen.

In vorteilhafter Weise erfolgt eine Analyse der Daten anhand syntaktischer Suchverfahren, semantischer Suchverfahren und/oder heuristischer Suchverfahren. Das letztgenannte Suchverfahren trägt dem Umstand Rechnung, dass Umfang und Vielfalt von Schadsoftware ständig im Steigen begriffen sind und dass Gegenmaßnahmen nicht mehr auf einen speziellen und vorbekannten Typ von Schadsoftware entwickelt werden können.

Ein Ausführungsbeispiel mit weiteren Vorteilen und Ausgestaltungen der Erfindung wird im Folgenden anhand der Zeichnung näher erläutert.

Dabei zeigen:
- Figur 1:: Eine schematische Darstellung einer Struktur eines paketorientierten Netzwerkprotokolls;
- Figur 2:: Eine schematische Darstellung von Funktionskomponenten eines erfindungsgemäßen Virenscanners;
- Figur 3:: Ein Strukturbild eines paketorientierten Kommunikationssystems; und;
- Figur 4:: Eine schematische Darstellung von Funktionskomponenten eines Kommunikationsendgeräts.

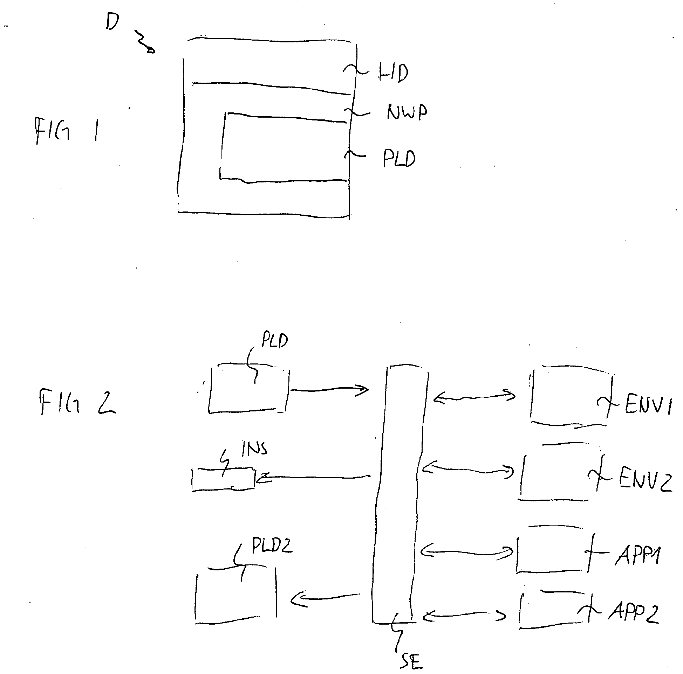

Figur 1 zeigt ein Datenpaket D, bestehend aus einem Nachrichtenkopfeintrag HD, auch Header genannt, sowie einem Nachrichtenbody, bestehend aus einem Netzwerkprotokollelemente NWP enthaltenden Teilanteil und einem Nutzdaten PLD enthaltenden Teilanteil.

In der vereinfachten Darstellung von Figur 1 wird angenommen, das die Nutzdaten PLD innerhalb eines einzigen Datenpakets D transportiert werden, was in der Praxis selbstverständlich nicht immer gewährleistet ist. Im Gegenteil kann sich eine organisatorisch zusammengehörende Menge an Nutzdaten PLD über mehrere Datenpakete D erstrecken, sodass die Nutzdaten PLD auf Empfängerseite aus mehreren Datenpaketen D zusammengesetzt werden müssen. Für eine vereinfachte Darstellung wird jedoch im Folgenden von einer Nutzdatengröße ausgegangen, welche mit einem einzigen Datenpaket D transportierbar ist.

Im Folgenden wird ohne Beschränkung der Allgemeingültigkeit davon ausgegangen, dass das Datenpaket D in einem SIP-Protokoll formatiert ist. Ein solches SIP-Datenpaket D ist selbst wieder Nutzdatenbestandteil eines (nicht dargestellten) Datenpakets, welches mit einem Transportprotokoll, beispielsweise TCP/IP formatiert ist. Das Transportprotokoll sowie weitere Schichten bleiben jedoch in den weiteren Ausführungen außer Betracht.

Das Netzwerkprotokoll SIP ist bekannt aus »SIP: Session Initiation Protocol«, RFC 3261, Juni 2002, http://www.ietf.org. Unter Multimediasitzungen werden beispielsweise Multimedia-Konferenzen, Internet-Telefonverbindungen (Voice over IP) und ähnliche Echtzeitkommunikationsverbindungen verstanden. SIP verfügt unter anderem über die Fähigkeit, einen Teilnehmer und somit ein bestimmtes Endgerät zu lokalisieren, eine Adresse dem Endgerät zuzuordnen als auch Verbindungen umzuleiten.

Das SIP-Datenpaket D enthält einen Nachrichtenkopfeintrag HD, in der Fachwelt auch als »Header« bekannt, welcher üblicherweise Signalisierungsdaten, beispielsweise zur Adressierung eines Empfängers und eines Senders des Datenpakets D enthält. Im Folgenden wird der aus Netzwerkprotokollelementen NWP und Nutzdaten PLD bestehende Body des Datenpakets näher betrachtet.

Mit dem hier beschriebenen Netzwerkprotokoll SIP bestehen besagte SIP-Nachrichten, welche mit bekannten Netzwerkprotokollelementen NWP, wie z.B. INVITE, REFER, MESSAGE, NOTIFY usw. gebildet werden.

Diese Netzwerkprotokollelemente haben die Funktion, definierte Aktionen auszulösen, wie z.B. einer Einrichtung einer Echtzeitkommunikation (INVITE) einer Weiterleitung einer Kommunikationssitzung an eine andere Kommunikationspartei (REFER) einem Aufruf einer Softwareapplikation auf einem Rechnersystem (MESSAGE) oder sogar einer Ausführung einer bestimmten Aktion (NOTIFY). Neben den Netzwerkprotokollelementen NWP enthalten derartige SIP-Anweisungen auch weitere Nutzdaten PLD, welche als Argumente zu den durch SIP-Nachrichten ausgelöste Funktionsausrufe zu verstehen sind.

Die Nutzdaten PLD werden durch das Netzwerkprotokoll SIP nicht ausgewertet. Dies bedeutet allerdings, dass selbst bei einer syntaktisch korrekten SIP-Nachricht ein potentiell schädigender Code bzw. potentiell schädigende Anweisungen im Nutzdatenanteil PLD enthalten sein können, welche im Netzwerkprotokoll SIP selbst keinerlei Bedeutung oder Schädigungspotential haben, welche sich jedoch bei Weitergabe an ein anderes Applikationsprotokoll bzw. an eine andere Applikation als Schadsoftware herausstellen können und dort eine potentielle Gefahr entfalten können.

Solche Anweisungen können also auch in einer anderen Ausführungsumgebung unerwünschte Effekte enthalten. Zum Beispiel kann eine SIP-Nachricht mit dem SIP-Befehl MESSAGE einen Aufruf einer Softwareapplikation zur Folge haben, welche auf einem das Datenpaket D empfangenden Zielrechner gestartet wird, wobei durch die Softwareapplikation der Nutzdatenanteil PLD der SIP-Nachricht bearbeitet wird. In Kontext dieser Softwareapplikation kann sich die Bearbeitung des Nutzdatenanteils PLD nun als schädlicher Code erweisen, während der schädliche Code im Netzwerkprotokoll SIP unbewertet bzw. unverständlich blieb.

Ein weiteres Beispiel sind Nachrichtenkopfeinträge bzw. Daten im Header einer INVITE-Nachricht. Für diese Einträge kann eine Speicherung in einer Log-Datei vorgesehen sein. Die Log-Datei kann durch eine dritte Softwareapplikation eingelesen werden. Eine SIP-Nachricht kann in einem Nachrichtenkopfeintrag ein Skript (»Script«) enthalten, wobei folgender Aufbau der SIP-Nachricht gewählt wird:

```
 <script>
 [Anweisungen des Skripts]
 </script>
```

Dieses Skript kann im Kontext der dritten Softwareapplikation schädigende Wirkungen entfalten. Es handelt sich also erneut um ein Beispiel, bei dem ursprünglich nicht oder in einem anderen Kontext bewertete Daten in einer unterschiedlichen, dritten Ausführungsumgebung bearbeitet werden.

Weiterhin kann der SIP-Nachrichtenkopfeintrag statt eines Benutzereintrags eine Verknüpfung bzw. Link auf einen Netzwerkhost bzw. einen Eintrag auf einer HTML-Seite enthalten. Diese Verknüpfung könnte ihrerseits schädigende Anweisungen in die SIP-Nachricht importieren.

Wenngleich die genannten Beispiele am Beispiel des SIP-Protokolls dargestellt sind, ist dieses Problem nicht auf dieses Protokoll beschränkt. Weitere Beispiele, in denen die genannten Probleme in einem Netzwerkprotokoll auftreten können, entstehen beispielsweise auch mit einer Verwendung des SNMP-Protokolls, des uaCSTA-Protokolls, des Java-Script-Protokolls, des SOAP-Protokolls, des MGCP-Protokolls, des H.323-Protokolls usw.

Das hier vorgestellte erfinderische Verfahren hat das Ziel, Kombinationen verschiedener Elemente, welche als Schadsoftware zu wirken geeignet sind, zu identifizieren und verschiedene Protokollelemente unterschiedlicher Applikationsprotokolle oder Ausführungsumgebungen zu korrelieren, um Anweisungen zu identifizieren, welche zumindest teilweise als Schadsoftware wirken.

Im Folgenden wird unter weiterer Bezugnahme auf die Funktionseinheiten der Figur 1 ein Virenscanner mit Anwendung des erfindungsgemäßen Verfahrens in einer Scan Engine näher erläutert.

Figur 2 zeigt eine Scan Engine SE als Ausführungsform des erfinderischen Verfahrens. Die Scan Engine SE nimmt Nutzdaten PLD an einem Eingang entgegen und gibt modifizierte Nutzdaten PLD2 an einem Ausgang weiter.

Bei den modifizierten Nutzdaten PLD2 handelt es sich beispielsweise um Nutzdaten PLD2, in welchen Anweisungen entfernt sind, welche unter Ausführung des erfinderischen Verfahrens als Schadsoftware zu qualifizieren sind. Optional oder zusätzlich verfügt die Scan Engine SE über die Möglichkeit, Anweisungen INS an eine (nicht dargestellte) Applikation zu übergeben, welche in einem weiteren Schritt oder gleichzeitig mit einer Bearbeitung der modifizierten Nutzdaten PLD2 oder der nichtmodifizierten Nutzdaten PLD betraut ist.

Die Scan Engine SE ist in bidirektionaler Kommunikation mit einer Mehrzahl von Ausführungsumgebungseinheiten ENV1, ENV2 sowie mit einer Mehrzahl von Applikationsprotokolleinheiten APP1, APP2. Die genannten Einheiten ENV1, ENV2, APP1, APP2 weisen entweder den Charakter einer Datei auf, welche in Zusammenarbeit mit der ausführenden Scan Engine SE einen Regelsatz zur Definition schädlicher Anweisungen oder auch zur Definition unschädlicher Anweisungen zur Verfügung stellt. Hierzu sind die Einheiten ENV1, ENV2, APP1, APP2 beispielsweise als Datenbank oder auch als schlichte Textdatei ausgeführt. Alternativ oder zusätzlich verfügen die genannten Einheiten ENV1, ENV2, APP1, APP2 ihrerseits über Ressourcen, welche eine eigenständige Bearbeitung in Zusammenarbeit mit der Scan Engine zur Verfügung stellen.

In einer alternativen Ausführungsform der Erfindung sind die Ausführungsumgebungseinheiten ENV1, ENV2 als sogenannte »Sand Box« ausgeführt, welche in einer abgesicherten separaten Ausführungsumgebung eine risikofreie Simulation und Bewertung von Anweisungen gestatten, wobei die risikofreie Ausführung in einem jeweiligen durch die Ausführungsumgebungseinheit vorgegebenen Ausführungskontext durchgeführt wird.

Die Applikationsprotokolleinheiten APP1, APP2 sind vorzugsweise für ein jeweiliges Applikationsprotokoll definiert. In einer ersten Ausführungsform ist die erste Applikationsprotokolleinheit APP1 so gestaltet, das mit ihrer Hilfe eine Bewertung von Anweisungen in Kontext des HTML-Protokolls ermöglicht ist. Alternativ oder zusätzlich werden White-Lists oder Black-Lists in den jeweiligen Applikationsprotokolleinheiten APP1, APP2 definiert, wobei diese entweder separat als jeweilige Applikationsprotokolleinheit vorliegen, oder zusammen in einer jeweiligen Applikationsprotokolleinheit APP1, APP2 enthalten sind.

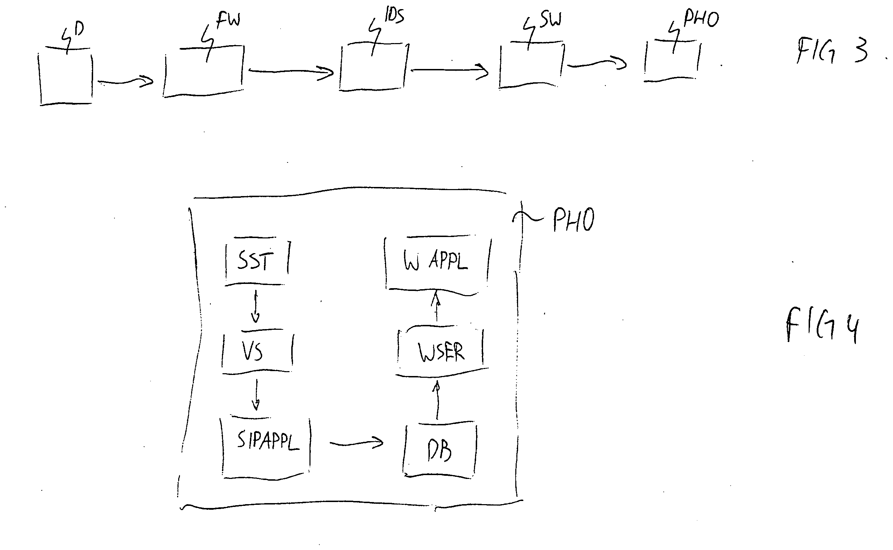

Figur 3 zeigt eine Kommunikationsumgebung als Teil eines (nur teilweise dargestellten) Kommunikationssystems. Das Kommunikationssystem umfasst eine Firewall FW, welche beispielsweise ein einzelnes Segment des Kommunikationssystems gegenüber anderen Netzwerksegmenten abgrenzt. Die Firewall FW ist nicht in der Lage, einen hier beschriebenen Angriff abzuwehren, da sie bei Vorliegen einer SIP-Nachricht in einer üblichen Syntax, welche an einen üblichen SIP-Port gerichtet wird, keine weiteren Untersuchungen vornimmt.

Die Firewall FW ist mit einem Angriffsdetektionssystem (Intrusion Detection System) IDS verbunden, welches einer Erkennung von Angriffen, die an das Kommunikationssystem gerichtet sind, dient. Das Angriffsdetektionssystem IDS ergänzt eine durch die Firewall FW gewährleistete Sicherheit dadurch, dass ein- und ausgehende Datenpakete des Kommunikationssystems aufgezeichnet und/oder analysiert werden, um im Netzwerkverkehr Angriffsmuster zu erkennen. Heutige Angriffsdetektionssysteme IDS bewerten dabei überwiegend Anweisungen im Übertragungsprotokoll TCP/IP, also dem heute überwiegenden eingesetzten Transportprotokoll. Darüber hinaus gewährleisten Angriffsdetektionssysteme in eingeschränktem Maße eine Inspektion des Netzwerkprotokolls, deren Grenzen im Folgenden näher beschrieben werden.

Das Angriffsdetektionssystem IDS (Intrusion Detection System, IDS oder auch Intrusion Prevention System, IPS) kann zwar Regelverstöße im Netzwerkprotokoll detektieren, wie zum Beispiel Buffer-Overflow-Attacken oder Syntaxverstöße. Das Angriffsdetektionssystem IDS ist jedoch seinerseits nicht in der Lage, potentiell schädigende Anweisungen zu identifizieren, da es weder über Kenntnisse über die spätere Ausführungsumgebung noch über das Applikationsprotokoll, mit dem die Anweisungen bearbeitet werden, im Bilde ist.

Eine Vermittlungseinheit SW bzw. Soft Switch ist mit dem Angriffsdetektionssystem IDS verbunden und stellt somit den zentralen Knotenpunkt für eine Vermittlung von Echtzeitkommunikationsverbindungen innerhalb des Kommunikationssystems sowie mit Kommunikationsendgeräten außerhalb des Kommunikationssystems dar. Die Vermittlungseinheit SW ist dabei als paketorientiert kommunizierender Server ausgebildet. Schließlich ist ein exemplarisch dargestelltes Kommunikationsendgerät PHO als Kommunikationsteilnehmer an die Vermittlungseinheit SW angeschlossen.

Figur 4 zeigt eine schematische Darstellung eines internen Aufbaus eines Kommunikationsendgeräts PHO. Zu exemplarischen Zwecken sei erneut unterstellt, dass das Kommunikationsendgerät PHO eine Unterstützung des SIP-Protokolls vorsieht. Hierzu ist eine Protokollstapelverarbeitungseinheit SST vorgesehen, welche eingehende und ausgehende Daten gemäß dem SIP-Protokoll bearbeitet. Gemäß einer in Figur 4 durch Pfeilrichtung symbolisierten Darstellung einer Bearbeitung von eingehenden Datenpaketen durchläuft ein Datenpaket anschließend den erfindungsgemäßen Virenscanner VS und wird nach einer dortigen entsprechenden Bearbeitung einer SIP-Applikation SIPAPPL zugeführt. Zur Bearbeitung eines eingehenden Datenpakets greift die SIP-Applikation SIPAPPL auf eine Datenbank DB zu, auf welche ihrerseits von einer Webapplikation WAPPL über einen Webserver WSER zugegriffen wird.

Das erfindungsgemäße Verfahren sieht eine Korrelation verschiedener Protokollelemente von verschiedenen Applikationsprotokollen und Ausführungsumgebungen (Execution Environments) vor, um im Rahmen der Analyse zu bestimmen, ob potentiell schädigende Anweisungen in den untersuchten Daten enthalten sind. Eine solche applikations- und plattformübergreifende Analyse kann durch herkömmliche Virenscanner nicht durchgeführt werden.

Es sind zwar Angriffe bekannt, welche im Zusammenhang mit Web-Applikationen, insbesondere Browser, als Cross-Site-Scripting bekannt sind und welche auf HTML- oder Java-Script-Ebene böswillige Anweisungen einschleusen. Diese sind jedoch mit fachmännischen Mitteln dadurch zu bekämpfen, dass der Code semantisch analysiert und entsprechende Teile ausgefiltert werden. Im Unterschied zum Problem, das der Erfindung zugrunde liegt, ist bei diesen Cross-Site-Scripting-Attacken das Applikationsprotokoll, z.B. HTML, von vorneherein bekannt.

Im hier erläuterten Zusammenhang, insbesondere in einem VoIP-Umfeld (Voice over Internet Protocol) kann jedoch ein mitgeliefertes Nutzdatenpaket von einer Vielzahl von Applikationsprotokollen bearbeitet bzw. auf einer Vielzahl von Ausführungsumgebungen zum Ablauf gebracht werden.

Der erfindungsgemäße Virenscanner bzw. die das erfinderische Verfahren ausführende Mittel sind alternativ
- zwischen der Firewall FW und dem Angriffsdetektionssystem IDS und/oder,
- innerhalb des Angriffsdetektionssystem IDS und/oder,
- zwischen dem Angriffsdetektionssystem IDS und der Vermittlungseinheit SW und/oder,
- in der Vermittlungseinheit SW und/oder,
- zwischen der Vermittlungseinheit SW und der Protokollstapelverarbeitungseinheit SST und/oder,
- in der Protokollstapelverarbeitungseinheit SST,
einsetzbar.

## Patentansprüche

1. Verfahren zur Erkennung von Schadsoftware, bei dem von einer Scan Engine (SE) eines Virenscanners (VS) eines Kommunikationssystems
a) paketorientierte und in einem Netzwerkprotokoll, das protokollhierarchisch oberhalb eines Übertragungsprotokolls und unterhalb eines Applikationsprotokolls eingeordnet ist, formatierte Daten (D), die einen Nachrichtenkopfeintrag (HD) und Nutzdaten (PLD) umfassen und zur Steuerung und Durchführung einer paketorientierten Echtzeitkommunikation in dem Kommunikationssystem bestimmt sind, empfangen werden,
b) die im Rahmen des Netzwerkprotokolls transportierten Nachrichtenkopfeinträge (HD) und Nutzdaten (PLD) einer Analyse bezüglich einer Wirkung der Daten (D) bei einer Behandlung der Daten (D) in verschiedenen Applikationsprotokollen, unterzogen werden, in der die Daten (D) auf Anweisungen (INS), insbesondere Befehle, untersucht werden, welche in mindestens einem der verschiedenen Applikationsprotokolle zumindest teilweise als Schadsoftware wirken, und
c) die im Rahmen des Netzwerkprotokolls transportierten Nachrichtenkopfeinträge (HD) und Nutzdaten (PLD) bezüglich einer Wirkung der Daten (D) bei einer Behandlung der Daten (D) in verschiedenen Ausführungsumgebungen, insbesondere Betriebssystemen, auf Anweisungen (INS) untersucht werden, welche auf mindestens einer der verschiedenen Ausführungsumgebungen, die von der Ausführungsumgebung verschieden ist, auf welcher das Verfahren zur Erkennung von Schadsoftware zum Einsatz kommt, zumindest teilweise als Schadsoftware wirken, wobei
d) die Analyse applikations- und ausführungsumgebungs-übergreifend derart durchgeführt wird, dass bestimmt werden kann, ob potentiell schädigende Anweisungen (INS) in den Daten (D) enthalten sind, wenn die Daten (D) in einer Applikation verarbeitet werden, welche nicht in der Ausführungsumgebung betrieben wird, auf welcher das Verfahren zur Erkennung von Schadsoftware zum Einsatz kommt.

2. Verfahren nach Anspruch 1,
**dadurch gekennzeichnet,**
**dass** bei Vorliegen von Anweisungen (INS), welche in mindestens einem Applikationsprotokoll zumindest teilweise als Schadsoftware wirken, eine Meldung an die das Applikationsprotokoll bearbeitenden Applikation gesendet wird, welche eine Nicht-Ausführung der Anweisungen (INS) und/oder eine Löschung der Anweisungen (INS) zur Folge hat.

3. Verfahren nach einem der Ansprüche 1 bis 2,
**dadurch gekennzeichnet,**
**dass** die Anweisungen (INS) in Form von
- kompilierten Code, oder,
- Skriptanweisungen, oder,
- Makroanweisungen
vorliegen.

4. Verfahren nach einem der vorhergehenden Ansprüche,
**dadurch gekennzeichnet,**
**dass** Ausführungsumgebungseinheiten (ENV1, ENV2) als sogenannte »Sand Box« ausgeführt werden, welche in einer abgesicherten separaten Ausführungsumgebung eine risikofreie Simulation und Bewertung von Anweisungen (INS) gestatten, wobei die risikofreie Ausführung in einem jeweiligen durch die Ausführungsumgebungseinheit vorgegebenen Ausführungskontext durchgeführt wird.

5. Verfahren nach einem der vorhergehenden Ansprüche,
**dadurch gekennzeichnet,**
**dass** zur Analyse der Daten (D) eine jeweilige White-List zur Definition von Anweisungen (INS) herangezogen wird, welche in einem jeweiligen Applikationsprotokoll als unschädlich klassifiziert sind.

6. Verfahren nach einem der vorhergehenden Ansprüche,
**dadurch gekennzeichnet,**
**dass** zur Analyse der Daten (D) eine jeweilige Black-List zur Definition von Anweisungen (INS) herangezogen wird, welche in einem jeweiligen Applikationsprotokoll zumindest teilweise als Schadsoftware klassifiziert sind.

7. Verfahren nach einem der vorhergehenden Ansprüche,
**dadurch gekennzeichnet,**
**dass** zur Analyse der Daten (D) syntaktische und/oder semantische und/oder heuristische Sucherverfahren angewandt werden.

8. Verfahren nach einem der vorhergehenden Ansprüche,
**dadurch gekennzeichnet,**
**dass** die paketorientierten Daten (D) in einem SIP-Protokoll formatiert sind,
das aus den empfangenen Daten (D) SIP-Nachrichtenelemente einerseits sowie Nutzdaten (PLD) in einem SIP-Body extrahiert werden,
bei dem sowohl die SIP-Nachrichtenelemente als auch die Nutzdaten (PLD) der Analyse unterzogen werden.

9. Verfahren nach einem der Ansprüche 1 bis 7,
**dadurch gekennzeichnet,**
**dass** die paketorientierten Daten (D) in einem
SNMP-Protokoll und/oder,
uaCSTA-Protokoll und/oder,
Java-Script-Protokoll und/oder,
SOAP-Protokoll und/oder,
H.323-Protokoll und/oder,
MGCP-Protokoll
formatiert sind.

10. Verfahren nach einem der vorhergehenden Ansprüche,
**dadurch gekennzeichnet,**
**dass** die paketorientierten Daten (D) zur Steuerung und Durchführung einer paketorientierten Echtzeitkommunikation bestimmt sind.

11. Computerprogrammprodukt mit Mitteln zur Durchführung des Verfahrens nach einem der vorhergehenden Ansprüche, wenn das Computerprogrammprodukt in einem Virenscanner zur Ausführung gebracht wird.

12. Computerprogrammprodukt mit Mitteln zur Durchführung des Verfahrens nach einem der vorhergehenden Ansprüche, wenn das Computerprogrammprodukt in einem Kommunikationsendgerät zur Ausführung gebracht wird.

13. Scan Engine (SE) eines Virenscanners (VS) eines Kommunikationssystems zur Erkennung von Schadsoftware,
mit Mitteln zum Empfang paketorientierter Daten (D), welche
a) in einem Netzwerkprotokoll, das protokollhierarchisch oberhalb eines Übertragungsprotokolls und unterhalb eines Applikationsprotokolls eingeordnet ist, formatiert sind, und die einen Nachrichtenkopfeintrag (HD) und Nutzdaten (PLD) umfassen und zur Steuerung und Durchführung einer paketorientierten Echtzeitkommunikation in dem Kommunikationssystem bestimmt sind,
mit Mitteln zur Analyse der Daten (D), die derart ausgeführt sind, dass
b) die im Rahmen des Netzwerkprotokolls transportierten Nachrichtenkopfeinträge (HD) und Nutzdaten (PLD) einer Analyse bezüglich einer Wirkung der Daten (D) bei einer Behandlung der Daten (D) in verschiedenen Applikationsprotokollen, unterzogen werden, in welcher die Daten (D) auf Anweisungen (INS), insbesondere Befehle, untersucht werden, welche in mindestens einem der verschiedenen Applikationsprotokolle zumindest teilweise als Schadsoftware wirken,
c) die im Rahmen des Netzwerkprotokolls transportierten Nachrichtenkopfeinträge (HD) und Nutzdaten (PLD) bezüglich einer Wirkung der Daten (D) bei einer Behandlung der Daten (D) in verschiedenen Ausführungsumgebungen, insbesondere Betriebssystemen, auf Anweisungen (INS) untersucht werden, welche auf mindestens einer der verschiedenen Ausführungsumgebungen, die von der Ausführungsumgebung verschieden ist, auf welcher das Verfahren zur Erkennung von Schadsoftware zum Einsatz kommt, zumindest teilweise als Schadsoftware wirken, wobei
d) die Mittel zur Analyse der Daten (D) applikations- und ausführungsumgebungs-übergreifend derart ausgeführt sind, dass bestimmt werden kann, ob potentiell schädigende Anweisungen (INS) in den Daten (D) enthalten sind, wenn die Daten (D) in einer Applikation verarbeitet werden, welche nicht in der Ausführungsumgebung betrieben wird, auf welcher das Verfahren zur Erkennung von Schadsoftware zum Einsatz kommt.

## Claims

1. A method for recognizing malware, in which, by means of a scan engine (SE) or a virus scanner (VS) of a communication system,
a) packet-oriented data (D), formatted in a network protocol which in protocol hierarchy is classified above a transmission protocol and below an application protocol, which comprises a message header entry (HD) and a payload (PLD) and is intended for controlling and carrying out a packet-oriented real-time communication in the communication system, is received,
b) the message header entries (HD) and payload (PLD) transported in the context of the network protocol are subjected to an analysis with regard to an action of the data (D), in a treatment of the data (D) in different application protocols, in which the data (D) is analyzed for the presence of instructions (INS), in particular commands, which act at least partially as malware in at least one of the different application protocols, and
c) the message header entries (HD) and payload (PLD) transported in the context of the network protocol are analyzed with regard to an action of the data (D), in a treatment of the data (D) in different execution environments, in particular operating systems, for the presence of instructions (INS) which act at least partially as malware on at least one of the different execution environments which is different from the execution environment where the method for recognizing malware is used, wherein
d) the analysis is carried out in an application- and execution environment-overarching manner, in such a manner that it is possible to determine whether potentially harmful instructions (INS) are contained in the data (D) in the case in which the data (D) is processed in an application which is not run in the execution environment where the method for recognizing malware is used.

2. The method according to Claim 1,
**characterized in that**,
in the case of presence of instructions (INS) which act at least partially as malware in at least one application protocol, a message is sent to the application processing the application protocol, which results in non-execution of the instructions (INS) and/or in a deletion of the instructions (INS) .

3. The method according to either of Claims 1 to 2,
**characterized in that**
the instructions (INS) are present in the form of
- compiled code or
- script instructions or
- macro instructions.

4. The method according to any one of the preceding claims,
**characterized in that**
the execution environment units (ENV1, ENV2) are designed in so-called "sand box" form enabling, in a secured separate execution environment, a risk-free simulation and evaluation of instructions (INS), wherein the risk-free execution is carried out in a respective execution context predetermined by the execution environment unit.

5. The method according to any one of the preceding claims,
**characterized in that**,
for the analysis of the data (D), a respective white list is used for the definition of instructions (INS) which are classified as harmless in a respective application protocol.

6. The method according to any one of the preceding claims,
**characterized in that**,
for the analysis of the data (D), a respective black list is used for the definition of instructions (INS) which are classified at least partially as malware in a respective application protocol.

7. The method according to any one of the preceding claims,
**characterized in that**,
for the analysis of the data (D), syntactic and/or semantic and/or heuristic search methods are used.

8. The method according to any one of the preceding claims,
**characterized in that**
the packet-oriented data (D) is formatted in SIP protocol,
that SIP message elements from the received data (D), on the one hand, as well as payload (PLD) in a SIP body are extracted,
in which both the SIP message elements and also the payload (PLD) are subjected to the analysis.

9. The method according to any one of Claims 1 to 7,
**characterized in that**
the packet-oriented data (D) is formed in
SNMP protocol and/or
uaCSTA protocol and/or
Java Script protocol and/or
SOAP protocol and/or
H.323 protocol and/or
MGCP protocol.

10. The method according to any one of the preceding claims,
**characterized in that**
the packet-oriented data (D) is intended for the control and execution of a packet-oriented real-time communication.

11. A computer program product with means for carrying out the method according to any one of the preceding claims, in the case in which the computer program product is made to be executed in a virus scanner.

12. A computer program product with means for carrying out the method according to any one of the preceding claims, in the case in which the computer program product is made to be executed in a communication terminal.

13. A scan engine (SE) of a virus scanner (VS) of a communication system for recognizing malware,
with means for receiving packet-oriented data (D) which
a) is formatted in a network protocol, which in protocol hierarchy is classified above a transmission protocol and below an application protocol, and which comprises a message header entry (HD) and a payload (PLD) and is intended for controlling and carrying out a packet-oriented real-time communication in the communication system,
with means for analyzing the data (D), which are designed in such a manner that
b) the message header entries (HD) and payload (PLD) transported in the context of the network protocol are subjected to an analysis with regard to an action of the data (D), in a treatment of the data (D) in different application protocols, in which the data (D) is analyzed for the presence of instructions (INS), in particular commands, which act at least partially as malware in at least one of the different application protocols,
c) the message header entries (HD) and payload (PLD) transported in the context of the network protocol are analyzed with regard to an action of the data (D), in a treatment of the data (D) in different execution environments, in particular operating systems, for the presence of instructions (INS) which act at least partially as malware on at least one of the different execution environments, which is different from the execution environments where the method for recognizing malware is used, wherein
d) the means for analyzing the data (D) in an application- and execution environment-overarching manner are designed in such a manner that it is possible to determine whether potentially harmful instructions (INS) are contained in the data (D), in the case in which the data (D) is processed in an application which is not operated in the execution environment where the method for recognizing malware is used.

## Revendications

1. Procédé de reconnaissance de logiciels nuisibles, avec lequel par un moteur d'analyse par balayage (SE) d'un analyseur de virus (VS) d'un système de communication
a) sont reçues des données (D), orientées paquets et formatées dans un protocole de réseau, qui est classé selon une hiérarchie de protocoles au-dessus d'un protocole de transmission et en dessous d'un protocole d'application, qui comportent un en-tête de message (HD) et des données utiles (PLD) et sont destinées à la commande et à l'exécution d'une communication en temps réel orientée paquets dans le système de communication,
b) sont soumis les en-têtes (HD) et les données utiles (PLD), transportés dans le cadre du protocole de réseau, à une analyse en ce qui concerne un effet des données (D) lors d'une manipulation des données (D) dans différents protocoles d'application, dans lesquels les données (D) sont examinées relativement à des instructions (INS), en particulier des commandes, qui agissent dans au moins un des différents protocoles d'application au moins en partie en tant que logiciels nuisibles, et
c) sont examinés les en-têtes (HD) et les données utiles (PLD), transportés dans le cadre du protocole de réseau, en ce qui concerne un effet des données (D) lors d'une manipulation des données (D) dans différents environnements d'exécution, en particulier des systèmes d'exploitation, relativement à des instructions (INS) qui agissent sur au moins un des différents environnements d'exécution, qui est différent de l'environnement d'exécution sur lequel le procédé de reconnaissance de logiciels nuisibles entre en action, au moins en partie en tant que logiciels nuisibles, dans lequel
d) l'analyse au niveau des environnements d'application et d'exécution est exécutée d'une manière telle qu'il peut être déterminé si des instructions (INS) potentiellement nuisibles sont contenues dans les données (D) lorsque les données (D) sont traitées dans une application qui n'est pas mise en oeuvre dans l'environnement d'exécution sur lequel le procédé de reconnaissance de logiciels nuisibles entre en action.

2. Procédé selon la revendication 1,
**caractérisé**
**en ce que**, en présence d'instructions (INS) qui agissent dans au moins un protocole d'application au moins en partie en tant que logiciels nuisibles, est envoyé à l'application traitant le protocole d'application un message qui a pour conséquence une non-exécution des instructions (INS) et/ou un effacement des instructions (INS).

3. Procédé selon l'une quelconque des revendications 1 à 2,
**caractérisé**
**en ce que** les instructions (INS) sont présentes sous forme de
- code compilé, ou
- instructions de script, ou
- macroinstructions.

4. Procédé selon l'une quelconque des revendications précédentes,
**caractérisé**
**en ce que** des unités d'environnement d'exécution (ENV1, ENV2) sont exécutées en tant que soi-disant « bacs à sable » qui permettent dans un environnement d'exécution séparé sécurisé une simulation et une évaluation sans risques d'instructions (INS), dans lequel l'exécution sans risques est exécutée dans un contexte d'exécution prédéfini respectivement par l'unité d'environnement d'exécution.

5. Procédé selon l'une quelconque des revendications précédentes,
**caractérisé**
**en ce que**, pour l'analyse des données (D), une liste blanche respective est mise à contribution pour la définition d'instructions (INS) qui sont classées dans un protocole d'application respectif en tant que non nuisibles.

6. Procédé selon l'une quelconque des revendications précédentes,
**caractérisé**
**en ce que**, pour l'analyse des données (D), une liste noire respective est mise à contribution pour la définition d'instructions (INS) qui sont classées dans un protocole d'application respectif au moins en partie en tant que logiciels nuisibles.

7. Procédé selon l'une quelconque des revendications précédentes,
**caractérisé**
**en ce que**, pour l'analyse des données (D), des procédés de recherche syntactiques et/ou sémantiques et/ou heuristiques sont employés.

8. Procédé selon l'une quelconque des revendications précédentes,
**caractérisé**
**en ce que** les données orientées paquets (D) sont formatées dans un protocole SIP,
**en ce que**, à partir des données (D) reçues sont extraits d'un côté des éléments de message SIP ainsi que des données utiles (PLD) dans un corps SIP,
dans lequel aussi bien les éléments de message SIP que les données utiles (PLD) sont soumis à l'analyse.

9. Procédé selon l'une quelconque des revendications 1 à 7,
**caractérisé**
**en ce que** les données orientées paquets (D) sont formatées dans un
protocole SNMP, et/ou
protocole uaCSTA, et/ou
protocole Java-Script, et/ou
protocole SOAP, et/ou
protocole H.323, et/ou
protocole MGCP.

10. Procédé selon l'une quelconque des revendications précédentes, **caractérisé en ce que** les données orientées paquets (D) sont déterminées pour la commande et l'exécution d'une communication en temps réel orientée paquets.

11. Produit-programme d'ordinateur avec des moyens pour l'exécution du procédé selon l'une quelconque des revendications précédentes lorsque le produit-programme d'ordinateur est mis en oeuvre dans un analyseur de virus.

12. Produit-programme d'ordinateur avec des moyens pour l'exécution du procédé selon l'une quelconque des revendications précédentes lorsque le produit-programme d'ordinateur est mis en oeuvre dans un appareil terminal de communication.

13. Moteur d'analyse par balayage (SE) d'un analyseur de virus (VS) d'un système de communication pour la reconnaissance de logiciels nuisibles, avec des moyens pour la réception de données orientées paquets (D) qui
a) sont formatées dans un protocole de réseau, qui est classé selon une hiérarchie de protocoles au-dessus d'un protocole de transmission et en dessous d'un protocole d'application, et qui comportent un en-tête de message (HD) et des données utiles (PLD) et sont destinées à la commande et à l'exécution d'une communication en temps réel orientée paquets dans le système de communication,
avec des moyens pour l'analyse des données (D) qui sont exécutés de manière que
b) les en-têtes (HD) et les données utiles (PLD) transportés dans le cadre du protocole de réseau sont soumis à une analyse en ce qui concerne un effet des données (D) lors d'une manipulation des données (D) dans différents protocoles d'application, dans lesquels les données (D) sont examinées relativement à des instructions (INS), en particulier des commandes, qui agissent dans au moins un des différents protocoles d'application au moins en partie en tant que logiciels nuisibles,
c) les en-têtes (HD) et les données utiles (PLD), transportés dans le cadre du protocole de réseau, sont examinés en ce qui concerne un effet des données (D) lors d'une manipulation des données (D) dans différents environnements d'exécution, en particulier des systèmes d'exploitation, relativement à des instructions (INS) qui agissent sur au moins un des différents environnements d'exécution, qui est différent de l'environnement d'exécution sur lequel le procédé de reconnaissance de logiciels nuisibles entre en action, au moins en partie en tant que logiciels nuisibles, dans lequel
d) les moyens d'analyse des données (D) au niveau des environnements d'application et d'exécution sont exécutés d'une manière telle qu'il peut être déterminé si des instructions (INS) potentiellement nuisibles sont contenues dans les données (D) lorsque les données (D) sont traitées dans une application qui n'est pas mise en oeuvre dans l'environnement d'exécution sur lequel le procédé de reconnaissance de logiciels nuisibles entre en action.
